# DEMANDE DE BREVET EUROPEEN

(11) **EP 1 442 968 A1**
(43) Date de publication de la demande: **04.08.2004**
(21) Numéro de dépôt: 04290218.9
(22) Date de dépôt: 28.01.2004
(51) Int. Cl.: B62D 55/084, B62D 49/06

(54) **Véhicule à chenilles**

(30) Priorité: 29.01.2003 FR 0300962
(71) Demandeur: Coeuret, Bernard, 14310 Epinay sur Odon (FR)
(72) Inventeur: Coeuret, Bernard, 14310 Epinay sur Odon (FR)
(74) Mandataire: Cabinet HERRBURGER

(57) **Abrégé**

Véhicule à chenilles comportant un châssis formé d'une partie supérieure recevant les équipements du véhicule et relié à deux trains à chenille.

Le châssis (2) comprend un équipement télescopique (18) relié aux deux trains de roulement (3) et un actionneur (181) commandant le mouvement télescopique de l'équipement (18) pour régler la largeur de voie.

## Description

### Domaine de l'invention

La présente invention concerne un véhicule à chenilles tel qu'un engin de chantier comportant un équipement installé sur un châssis et destiné à circuler sur un terrain difficile.

### Art antérieur

Il existe déjà de multiples engins de chantier à chenilles tels que des pelles ou excavatrices, de dimension et de puissance très variables allant des engins lourds susceptibles d'effectuer des travaux très importants jusqu'à de petits engins tels que des pelleteuses pour de petits chantiers notamment de fouille pour des installations de canalisation ou des véhicules agricoles. Ces petits engins ont l'avantage de pouvoir accéder à des terrains difficiles ou des passages étroits comme on en rencontre souvent sur des chantiers en agglomération.

De tels engins ont certes l'avantage de pouvoir circuler et travailler dans des passages étroits et de monter grâce à l'étroitesse de leur gabarit sur des véhicules de transport légers, mais ils ont l'inconvénient d'une stabilité relativement limitée surtout si le terrain est en pente et l'engin travaille comme excavatrice avec un bras en position très allongée.

L'étroitesse du châssis ou plus généralement celle du polygone de sustentation et la légèreté limitent l'activité de tels engins.

### But de l'invention

La présente invention a pour but de développer un véhicule à chenilles, du type défini ci-dessus, pour en améliorer l'efficacité et la diversité de l'utilisation, en bénéficiant en particulier d'un châssis étroit pour le transport et la circulation dans des passages étroits tout en offrant, en position de travail, une excellente stabilité sur des terrains plats ou mouvementés.

### But et avantages de l'invention

A cet effet l'invention concerne un véhicule à chenilles du type défini ci-dessus caractérisé en ce que le châssis comprend un équipement télescopique relié aux deux trains de roulement et un actionneur commandant le mouvement télescopique de l'équipement pour régler la largeur de voie.

La largeur de voie réglable de cet équipement a l'avantage de permettre le réglage d'une voie étroite pour le transport du véhicule et sa circulation dans des passages étroits tout en permettant ensuite, pour le travail proprement, l'écartement des voies pour augmenter la largeur d'appui et permettre un travail plus efficace de l'équipement du véhicule tel qu'un bras d'excavatrice ou de pelleteuse dans de bonnes conditions de stabilité et de sécurité.

Ce réglage de la largeur de voie se fait avantageusement pendant la circulation de l'engin ou à l'occasion de quelques mouvements d'aller et venue, sur une distance très courte, de façon à écarter ou rapprocher la voie pendant le déplacement du véhicule sur ces deux trains de chenille pour éviter d'exercer des efforts transversaux importants sur les chenilles.

Le réglage de la voie facilite également l'utilisation du véhicule dans des conditions particulières si par exemple le véhicule doit enjamber une tranchée dans le sens longitudinal, pour travailler plus efficacement avec son bras de pelleteuse, dans l'axe de la tranchée.

De multiples autres exemples d'utilisation particulières d'un tel véhicule à chenilles sont envisageables.

Suivant une autre caractéristique avantageuse, l'équipement télescopique est formé de deux ensembles de tubes télescopiques. Ces deux ensembles sont placés de préférence à l'avant et à l'arrière du châssis de manière à porter la partie supérieure du châssis et les équipements de travail tels que le bras d'une excavatrice, la cabine du conducteur, l'unité motrice et l'équipement hydraulique d'une façon aussi répartie que possible par rapport au châssis.

De façon plus particulière, chaque ensemble de tubes télescopiques comprend :
- un tube enveloppe relié à la partie supérieure du châssis,
- un tube primaire engagé en coulissement dans le tube enveloppe et relié à l'un des trains à chenille,
- un tube secondaire engagé dans le tube principal et relié à l'autre train à chenille.

Cette réalisation de chaque ensemble de tubes télescopiques est particulièrement simple et facilite la fabrication puisque les différents ensembles d'un même engin sont identiques.

Dans le cas le plus général et comme indiqué ci-dessus il est prévu un ensemble de tubes télescopiques à l'avant et un ensemble à l'arrière du châssis. Toutefois si l'engin doit avoir un écartement très important, il peut être intéressant de multiplier le nombre d'ensembles de tubes télescopiques du châssis.

De façon particulièrement avantageuse les tubes sont de section rectangulaire ce qui est intéressant à la fois pour leur fabrication et pour le montage de ces tubes car cela permet d'interposer une plaque de glissement entre les surfaces des tubes en regard.

Suivant une autre caractéristique avantageuse l'actionneur est constitué par deux vérins reliés chacun par une extrémité à la partie supérieure du châssis et par l'autre extrémité à un train du roulement.

Ces vérins peuvent être commandés simultanément et en synchronisme de façon à conserver la symétrie des trains de roulement par rapport au châssis. Mais suivant le cas d'utilisation il peut être intéressant d'avoir une disposition non symétrique des chenilles, écartées par rapport au châssis pour que l'équipement du véhicule soit situé plutôt d'un côté que de l'autre, en fonction du travail à effectuer.

### Dessins

La présente invention sera décrite ci-après de manière plus détaillée à l'aide des dessins annexés dans lesquels :
- la figure 1 est une vue de face schématique d'un exemple de véhicule à chenilles selon l'invention,
- la figure 2 est une vue de gauche du châssis du véhicule selon l'invention,
- la figure 3 est une vue en coupe par un plan longitudinal du châssis du véhicule de la figure 1,
- la figure 4 est une vue en coupe d'un train à chenille du véhicule,
- la figure 5 est une coupe transversale du châssis du véhicule,
- la figure 6 est une vue en perspective de dessous du châssis,
- les figures 7 et 8 montrent une coupe transversale d'un ensemble télescopique du châssis, en position écartée et en position rapprochée.

### Description des modes de réalisation

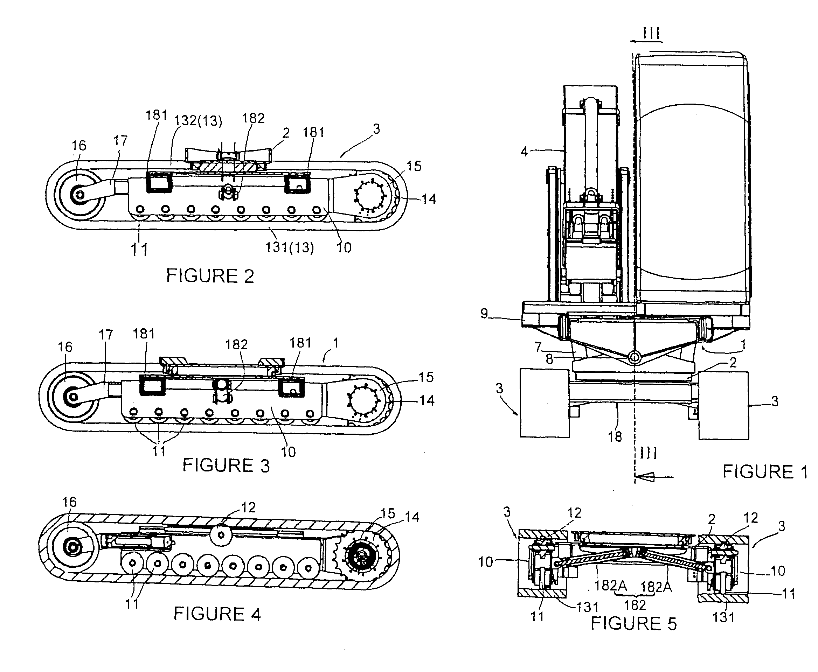

Selon la figure 1, l'invention concerne un véhicule à chenilles tel qu'un engin de chantier, un véhicule de transport ou un véhicule agricole présenté ici dans le cas d'une pelleteuse. Ce véhicule comporte un châssis 1 ayant une partie supérieure 2 reliée à deux trains de chenille 3. La partie supérieure 2 porte l'équipement de travail de l'engin tel que le bras 4 de la pelleteuse, le moteur, le groupe hydraulique, la cabine du conducteur 6 et différents moyens de réglage de position et d'inclinaison 7, 8 de la plate-forme 9portant cet équipement.

Ces différents moyens ne concernant pas directement l'objet de l'invention ne seront pas détaillés ici.

La figure 2 montre en vue de côté un train de roulement 3 se composant d'un caisson 10 muni d'un ensemble de roues de roulement 11 en partie basse et d'une roue de support 12, de même type en partie haute ; les roues de roulement 11 s'appuient sur le brin inférieur 131 de la chenille 13 et la roue supérieure 12 porte le brin de retour 132 de la chenille 13. Le caisson 10 est également muni du barbotin 14 équipé d'un moteur tel qu'un moto-réducteur hydraulique 15 pour assurer l'entraînement du véhicule et d'une roue tendeuse 16 portée par un bras 17, de manière à tendre la chenille 13 de ce train de roulement 3.

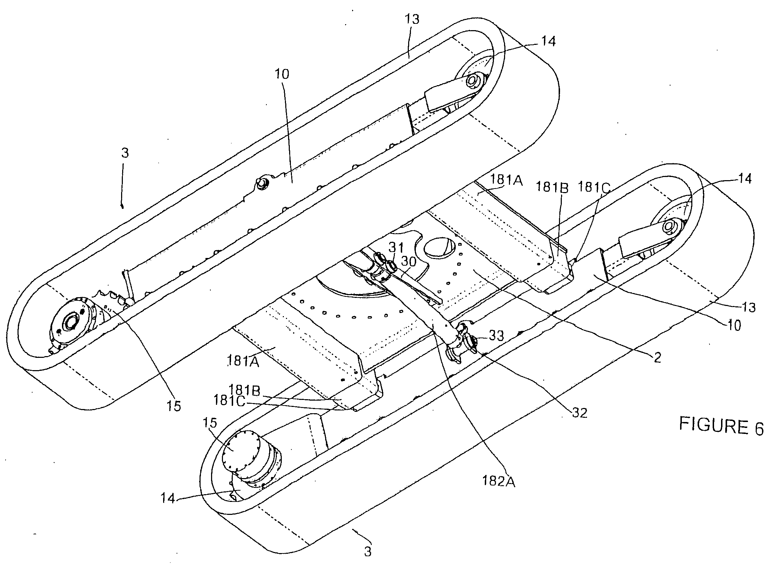

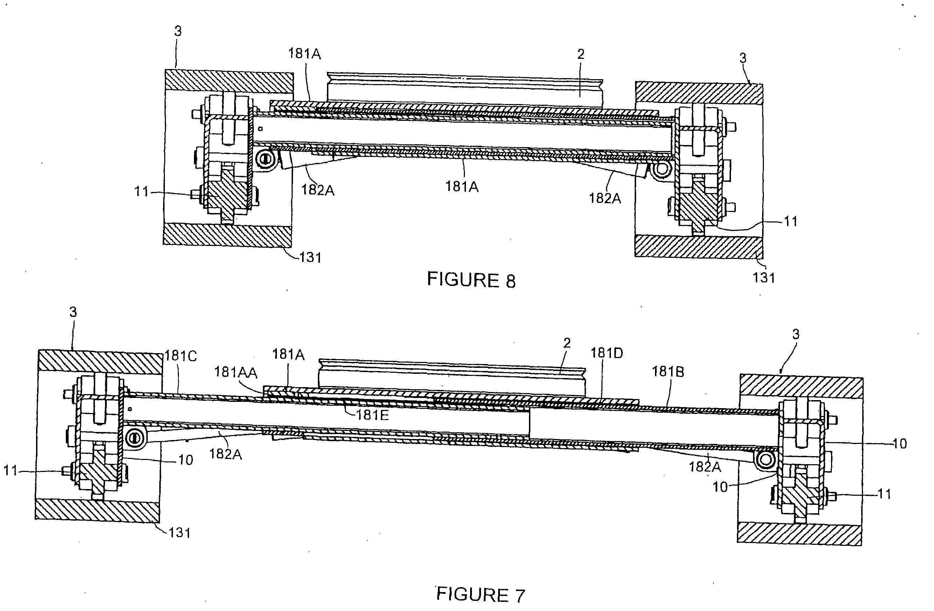

Selon l'invention la partie supérieure du châssis du véhicule comporte un équipement télescopique 18 représenté en coupe aux figures 3, 4, 5 et en vue en perspective à la figure 6. Cet équipement télescopique 18 est relié aux deux trains de roulement 3. Il est commandé par un actionneur constitué par deux vérins à double effet de manière à pouvoir régler l'écartement des trains de roulement entre une position rapprochée, extrême (figure 7) et une position écartée, extrême (figure 8), de manière à adapter la voie du véhicule à son utilisation comme cela a été développé ci-dessus.

L'équipement télescopique est constitué (figures 3, 6, 7 et 8) de deux ensembles de tubes télescopiques 181 disposés transversalement, reliant la partie supérieure 2 du châssis respectivement à chacun des deux trains de chenille 3 et dans l'actionneur 182 formé de deux vérins à double effet 182A. Selon les figures 3, 7 et 8, les deux ensembles de tubes télescopiques sont de même structure. Ils sont placés respectivement à l'avant et à l'arrière du châssis en étant relié chacun aux deux caissons 10 des trains à chenille 3.

Chaque ensemble de tubes télescopiques 181 se compose d'un tube enveloppe 181A relié à la partie supérieure 2 du châssis et d'un tube primaire 181B engagé dans ce tube enveloppe 181A de manière à pouvoir y coulisser ainsi que d'un tube secondaire 181 C engagé lui dans le tube primaire 181B.

Une extrémité du tube primaire 181B est reliée au caisson 10 de l'un des trains à chenille 3 et l'extrémité homologue du tube secondaire 181C est reliée au caisson 10 de l'autre train à chenille 2.

Les surfaces en regard du tube enveloppe et du tube primaire sont séparées 181D, 181E par une plaque de glissement portée de préférence par le tube enveloppe 181A au niveau de la surface intérieure/supérieure ainsi que par le tube secondaire 181C, sur sa face supérieure, prenant appui contre la surface intérieure/supérieure du tube primaire 181B. Le tube secondaire 181C prend également appui contre le tube enveloppe, par l'intermédiaire d'un élément d'appui 181AA situé à l'extrémité du tube enveloppe 181A autre que celle en contact en permanence avec le tube primaire 181A, de façon à compenser l'écartement entre le tube secondaire 181C et le tube enveloppe 18 1 C de ce côté.

Le tube primaire 181B a une longueur légèrement inférieure à l'écartement minimum des voies comme le montre la figure 7 alors que le tube secondaire 181C a une longueur pratiquement égale à cet écartement de voie.

Les figures 5 et 6 montrent plus particulièrement la disposition des actionneurs commandant et réglant la largeur de voie. Ces Actionneurs 182A sont des vérins à double effet reliés par une extrémité à une chape 30 portée par la partie supérieure du châssis en étant reliée par un axe d'articulation 31 et l'autre extrémité de chaque vérin est relié par une chape 32 et un axe d'articulation 33 au caisson 10 de chacun des trains de roulement 3.

Ces vérins, de même que les réducteurs hydrauliques entraînant les barbotins 15 sont reliés au circuit hydraulique du véhicule. Les vérins peuvent être commandés comme indiqué ci-dessus en synchronisme de manière égale de sorte que les trains de roulement s'écartent de manière symétrique par rapport à l'équipement du châssis ou de manière symétrique, par le décalage préférentiel d'un côté, ce qui nécessite des vérins de longueur plus grande que celle de vérins réalisant uniquement un réglage symétrique de la voie du véhicule.

## Revendications

1. Véhicule à chenilles comportant un châssis formé d'une partie supérieure recevant les équipements du véhicule et relié à deux trains à chenille,
**caractérisé en ce que**
le châssis (2) comprend un équipement télescopique (18) formé par deux ensembles de tubes télescopiques (181) relié aux deux trains de roulement (3) et un actionneur (181) commandant le mouvement télescopique de l'équipement (18) pour régler la largeur de voie,
chaque ensemble de tubes télescopiques (181) comprenant :
- un tube enveloppe (181A) relié à la partie supérieure (2) du châssis
- un tube primaire (181B) engagé en coulissement dans le tube enveloppe (181A) et relié à l'un des trains à chenille (3),
- un tube secondaire (181C) engagé dans le tube principal (181B) et relié à l'autre train à chenille (3).

2. Véhicule à chenilles selon la revendication 1,
**caractérisé en ce que**
les tubes (181A, B, C) sont de section rectangulaire.

3. Véhicule à chenilles selon la revendication 1,
**caractérisé en ce que**
une plaque de glissement (181D, E) est interposée entre le tube enveloppe (181A) et le tube primaire (181B) ainsi qu'entre le tube primaire (181B) et le tube secondaire (181C).

4. Véhicule à chenilles selon la revendication 1,
**caractérisé en ce que**
l'actionneur (181) commandant le mouvement télescopique de l'équipement (18) est formé par deux vérins à double effet (182A) reliés respectivement à la partie supérieure du châssis et à chacun des trains de roulement (3).
